# EUROPÄISCHE PATENTANMELDUNG

(11) **EP 3 657 363 A1**
(43) Veröffentlichungstag der Anmeldung: **27.05.2020**
(21) Anmeldenummer: 18208243.8
(22) Anmeldetag: 26.11.2018
(51) Int. Cl.: G06F 17/50

(54) **REGISTERTRANSFER-MODELL UND VERFAHREN ZUR SIMULATION EINES INTEGRIERTEN SCHALTKREISES**

(71) Anmelder: Siemens Aktiengesellschaft, 80333 München (DE)
(72) Erfinder: Ghameshlu, Majid, 1110 Wien (AT); Eppensteiner, Friedrich, 3620 Spitz (AT); Taucher, Herbert, 1190 Wien (AT)
(74) Vertreter: Maier, Daniel Oliver

(57) **Zusammenfassung**

Die Erfindung betrifft ein Registertransfer-Modell für die Simulation eines integrierten Schaltkreises, umfassend zumindest einen ersten CDC-Rekonvergenz-Pfad (1) sowie zumindest einen zweiten CDC-Rekonvergenz-Pfad (2), wobei der erste CDC-Rekonvergenz-Pfad (1) und der zweite CDC-Rekonvergenz-Pfad (2) in einer Ziel-Clock-Domain auf eine gemeinsame Registerstufe (6) zusammenkommen und wobei in der Ziel-Clock-Domain jeweils eine Taktübergangsstufe (3,3') zur Abtaktung jedes CDC-Rekonvergenz-Pfades (1,2) vorgesehen ist, welche Taktübergangsstufe (3,3') jeweils ein erstes Flipflop (4,4') sowie jeweils zumindest ein weiteres Flipflop (5,5') umfasst, wobei das zumindest eine weitere Flipflop (5,5') kurzschließbar in der Taktübergangsstufe (3,3') angeordnet ist.

## Beschreibung

### Gebiet der Erfindung

Die vorliegende Erfindung betrifft ein Registertransfer-Modell für die Simulation eines integrierten Schaltkreises, umfassend zumindest einen ersten CDC-Rekonvergenz-Pfad sowie zumindest einen zweiten CDC-Rekonvergenz-Pfad, wobei der erste CDC-Rekonvergenz-Pfad und der zweite CDC-Rekonvergenz-Pfad in einer Ziel-Clock-Domain auf eine gemeinsame Taktübergangsstufe zusammenkommen und wobei in der Ziel-Clock-Domain jeweils eine Taktübergangsstufe zur Abtaktung jedes CDC-Rekonvergenz-Pfades vorgesehen ist, welche Taktübergangsstufe jeweils ein erstes Flipflop sowie jeweils zumindest ein weiteres Flipflop umfasst.

Außerdem betrifft die vorliegende Erfindung ein Verfahren zur Simulation eines integrierten Schaltkreises umfassend die folgenden Schritte:
- Abtakten eines in einem ersten CDC-Rekonvergenz-Pfad geführten ersten Signals mittels einer ersten Taktübergangsstufe, welche erste Taktübergangsstufe ein erstes Flipflop sowie zumindest ein weiteres Flipflop umfasst;
- Abtakten eines in einem zweiten CDC-Rekonvergenz-Pfad geführten zweiten Signals mittels einer zweiten Taktübergangsstufe, welche zweite Taktübergangsstufe ein erstes Flipflop sowie zumindest ein weiteres Flipflop umfasst.

### Stand der Technik

Zur Simulation bzw. Hardware-Modellierung von integrierten Schaltkreisen (etwa anwendungsspezifische integrierte Schaltungen, englisch application-specific integrated circuit, ASIC) werden sogenannte Registertransfer-Modelle (englisch Register Transfer Level, RTL) eingesetzt. Dabei handelt es sich um eine Abstraktionsebene, bei der das zu simulierende bzw. zu modellierende System durch den Signalfluss zwischen Registern spezifiziert wird. Meist sind diese (1-Bit-) Register als Flipflops ausgeführt.

Da aus dem realen Chip-Layout einer zu simulierenden integrierten Schaltung abgeleitete Timing-Informationen im Rahmen solcher Registertransfer-Modelle nicht erfasst werden, liefern RTL-Simulationen grundsätzlich keinerlei Aussagen über CDC-Rekonvergenz-Probleme (CDC für engl. Clock Domain Crossing).

Zu derartigen Design-Problemen kann es kommen, wenn parallel synchronisierte Pfade einer Clock Domain in einer (anderen) Ziel-Clock-Domain auf eine gemeinsame Taktübergangsstufe zusammengeführt werden. Solche parallel synchronisierten Pfade werden als CDC-Rekonvergenz-Pfade bezeichnet. In der Realität werden die in diesen Pfaden geführten Signale beim Übergang in die Ziel-Clock-Domain nämlich durch Mehrfach-Abtaktungen robust gestaltet, wobei die genaue Anzahl der Takte von den jeweiligen Takt-Frequenzen und der Halbleitertechnologie abhängt. Bedingt durch das jeweilige Chip-Timing kann es dabei vorkommen, dass die parallel synchronisierten Pfade (CDC-Rekonvergenz-Pfade, abgekürzt für Clock-Domain-Crossing-Rekonvergenz-Pfad, oder alternativ Taktübergangspfad) in der Realität nicht jeweils dieselbe Verzögerung für dieselbe Anzahl von Abtaktungen beinhalten; in der entsprechenden RTL-Simulation gemäß dem Stand der Technik ist dies jedoch stets der Fall.

Somit ist es im Rahmen von RTL-Simulationen nicht möglich, festzustellen, ob eine bestimmte Stelle hinsichtlich Rekonvergenz im Falle von Clock Domain Crossing ein Design-Problem darstellt.

### Aufgabe der Erfindung

Es ist daher eine Aufgabe der vorliegenden Erfindung, ein Registertransfer-Modell sowie ein Verfahren zur Simulation eines integrierten Schaltkreises mittels Registertransfer-Modell bereitzustellen, welche CDC-Rekonvergenz-Probleme berücksichtigen können.

### Darstellung der Erfindung

Bei einem Registertransfer-Modell für die Simulation eines integrierten Schaltkreises, umfassend zumindest einen ersten CDC-Rekonvergenz-Pfad sowie zumindest einen zweiten CDC-Rekonvergenz-Pfad, wobei der erste CDC-Rekonvergenz-Pfad und der zweite CDC-Rekonvergenz-Pfad in einer Ziel-Clock-Domain auf eine gemeinsame Registerstufe zusammenkommen und wobei in der Ziel-Clock-Domain für jeden CDC-Rekonvergenz-Pfad jeweils eine Taktübergangsstufe zur Abtaktung jedes CDC-Rekonvergenz-Pfades vorgesehen ist, welche Taktübergangsstufe jeweils ein erstes Flipflop sowie jeweils zumindest ein weiteres Flipflop umfasst, wird diese Aufgabe gelöst, indem das zumindest eine weitere Flipflop kurzschließbar in der Taktübergangsstufe für den Zweck der Simulation angeordnet ist.

Somit umfasst jede zur Abtaktung eines CDC-Rekonvergenz-Pfades vorgesehene Taktübergangsstufe zumindest zwei Flipflops, von denen eines dazu eingerichtet ist, für den Zweck der Simulation kurzgeschlossen zu werden. Das Signal des jeweiligen CDC-Rekonvergenz-Pfades durchfließt somit bei der Abtaktung nicht zwingend sämtliche Flipflops der jeweiligen Taktübergangsstufe. Somit können die Signale unterschiedlicher CDC-Rekonvergenz-Pfade in Abhängigkeit von der Anzahl der durchflossenen Flipflops eine jeweils unterschiedliche Anzahl von Abtaktungen erfahren. Ein nicht kurzgeschlossenes Flipflop stellt dabei eine Abtaktung dar und erhöht somit die Anzahl der Verzögerungen um Eins; ein kurzgeschlossenes Flipflop verändert die Anzahl der Abtaktungen, die das Signal beim Durchlaufen der jeweiligen Taktübergangsstufe erfährt, nicht. Somit kann die unterschiedliche Anzahl von Verzögerungen, welche parallel synchronisierte CDC-Pfade in der Realität aufweisen können, mittels Registertransfer-Modellen nachgestellt werden. Das erfindungsgemäße Registertransfer-Modell kann in bestehende Simulations-Werkzeuge integriert werden, womit der Nachweis bzw. die Berücksichtigung von CDC-Konvergenz-Problemen auch mit bestehenden Simulations-Werkzeugen für die digitale Elektronik ermöglicht wird.

Bei einer bevorzugten Ausführungsform des erfindungsgemäßen Registertransfer-Modells ist es vorgesehen, dass das zumindest eine weitere Flipflop dazu eingerichtet ist, jeweils in Abhängigkeit von einer, vorzugsweise digitalen, vorzugsweise zwischen 0 und 1 liegenden, Zufallszahl kurzgeschlossen zu werden.

Dadurch wird es möglich, das zumindest eine weitere Flipflop jeder zur Abtaktung vorgesehenen Taktübergangsstufe im Rahmen einer RTL-Simulation jeweils dynamisch und zufällig kurzzuschließen. Dadurch können die durch das Layout des realen Chips bedingten Timing-Informationen optimal nachgebildet werden. Insbesondere kann es vorgesehen sein, für jede zur Abtaktung vorgesehene Taktübergangsstufe eine eigene Zufallszahl zu generieren und das zumindest eine weitere Flipflop in Abhängigkeit von dieser Zufallszahl kurzzuschließen. Es kann auch vorgesehen sein, für jedes weitere Flipflop eine eigene Zufallszahl zu generieren und das jeweilige Flipflop dann in Abhängigkeit von der jeweiligen Zufallszahl kurzzuschließen.

Bei einer weiteren bevorzugten Ausführungsform ist es vorgesehen, dass jede zur Abtaktung vorgesehene Taktübergangsstufe jeweils genau ein weiteres Flipflop aufweist.

Dies stellt eine für die meisten Anwendungsfälle ausreichende Ausführungsform des Registertransfer-Modells dar, die gleichzeitig einfach im Aufbau ist. Anhand dieser Ausführungsform der Erfindung können Situationen simuliert werden, in denen der erste CDC-Rekonvergenz-Pfad eine Verzögerung von zwei Takt-Perioden und der zweite CDC-Rekonvergenz-Pfad eine Verzögerung von einer Takt-Periode aufweist. Auch der umgekehrte Fall kann simuliert werden, nämlich Situationen, in denen der erste CDC-Rekonvergenz-Pfad eine Verzögerung von einer Takt-Periode und der zweite CDC-Rekonvergenz-Pfad eine Verzögerung von zwei Takt-Perioden aufweist.

Um auch komplexeren Situationen Rechnung tragen zu können, ist es bei einer anderen bevorzugten Ausführungsform vorgesehen, dass zumindest eine, vorzugsweise jede, der zur Abtaktung vorgesehenen Taktübergangsstufen jeweils mehrere weitere Flipflops aufweist, wobei eines, mehrere oder jedes dieser weiteren Flipflops kurzschließbar in der Taktübergangsstufe angeordnet ist. Bei der Simulation wird aber dann jeweils nur eines dieser weiteren Flipflops kurzgeschlossen.

Die der Erfindung zu Grunde liegende Aufgabe wird auch durch ein Verfahren zur Simulation eines integrierten Schaltkreises gelöst, welches die folgenden Schritte umfasst:
- Abtakten eines in einem ersten CDC-Rekonvergenz-Pfad geführten ersten Signals mittels einer ersten Taktübergangsstufe, welche erste Taktübergangsstufe ein erstes Flipflop sowie zumindest ein weiteres Flipflop umfasst;
- Abtakten eines in einem zweiten CDC-Rekonvergenz-Pfad geführten zweiten Signals mittels einer zweiten Taktübergangsstufe, welche zweite Taktübergangsstufe ein erstes Flipflop sowie zumindest ein weiteres Flipflop umfasst;
- Kurzschließen des zumindest einen weiteren Flipflops der ersten Taktübergangsstufe während des Abtaktens des ersten Signals und/oder Kurzschließen des zumindest einen weiteren Flipflops der zweiten Taktübergangsstufe während des Abtaktens des zweiten Signals;

Durch das Kurzschließen des zumindest einen weiteren Flipflops der ersten Taktübergangsstufe während des Abtaktens des ersten Signals und/oder des zumindest einen weiteren Flipflops der zweiten Taktübergangsstufe während des Abtaktens des zweiten Signals wird es möglich, CDC-Rekonvergenz-Probleme im Rahmen von RTL-Simulationen zu erfassen. Dadurch kann nämlich die unterschiedliche Anzahl von Verzögerungen, welche parallel synchronisierte CDC-Pfade in der Realität aufgrund des jeweiligen Chip-Timings aufweisen können, nachgestellt werden. Dabei erhöht sich die Verzögerung eines in einem CDC-Rekonvergenz-Pfad geführten Signals um Eins, wenn das Signal während des Abtaktens ein Flipflop der jeweiligen Taktübergangsstufe durchfließt.

Um das zumindest eine weitere Flipflop jeder zur Abtaktung vorgesehenen Taktübergangsstufe im Rahmen einer RTL-Simulation jeweils dynamisch und zufällig kurzschließen zu können, ist es bei einer bevorzugten Ausführungsform des erfindungsgemäßen Verfahrens vorgesehen, dass das Kurzschließen auf Basis von zumindest einer, vorzugsweise zwischen 0 und 1 liegenden, Zufallszahl erfolgt.

Bei einer weiteren bevorzugten Ausführungsform des Verfahrens ist es vorgesehen, dass das Kurzschließen des zumindest einen weiteren Flipflops der ersten Taktübergangsstufe auf Basis einer ersten Zufallszahl erfolgt und/oder das Kurzschließen des zumindest einen weiteren Flipflops der zweiten Taktübergangsstufe auf Basis einer zweiten Zufallszahl erfolgt.

Hierdurch können auch komplexere Situationen realitätsgetreu simuliert werden. Dabei können die erste und die zweite Zufallszahl von demselben Zufallszahlengenerator bereitgestellt werden.

Bei einer weiteren bevorzugten Ausführungsform ist es jedoch vorgesehen, dass die erste Zufallszahl durch einen ersten Zufallszahlengenerator erzeugt wird und die zweite Zufallszahl durch einen zweiten Zufallszahlengenerator erzeugt wird.

Dadurch können die weiteren Flipflops der zur Abtaktung dienenden Taktübergangsstufen voneinander unabhängig kurzgeschalten werden. Außerdem kann es vorgesehen sein, dass für das Kurzschließen jedes einzelnen der weiteren Flipflops eine eigene, unabhängige Zufallszahl generiert wird.

Die Erfindung umfasst auch ein Computerprogrammprodukt, welches ein Programm umfasst und direkt in einen Speicher eines Rechners ladbar ist, mit Programm-Mitteln, um alle Schritte des erfindungsgemäßen Verfahrens auszuführen, wenn das Programm vom Rechner ausgeführt wird. Das Computerprogramm betrifft also ein Verfahren zur Simulation eines integrierten Schaltkreises und umfasst die folgenden Schritte:
- Abtakten eines in einem ersten CDC-Rekonvergenz-Pfad geführten ersten Signals mittels einer ersten Taktübergangsstufe, welche erste Taktübergangsstufe ein erstes Flipflop sowie zumindest ein weiteres Flipflop umfasst;
- Abtakten eines in einem zweiten CDC-Rekonvergenz-Pfad geführten zweiten Signals mittels einer zweiten Taktübergangsstufe, welche zweite Taktübergangsstufe ein erstes Flipflop sowie zumindest ein weiteres Flipflop umfasst;
- Kurzschließen des zumindest einen weiteren Flipflops der ersten Taktübergangsstufe während des Abtaktens des ersten Signals und/oder Kurzschließen des zumindest einen weiteren Flipflops der zweiten Taktübergangsstufe während des Abtaktens des zweiten Signals.

Die Erfindung umfasst weiters ein Computerprogrammprodukt, welches ein Programm umfasst und direkt in einen Speicher eines Rechners ladbar ist, mit Programm-Mitteln, um die Implementierung des erfindungsgemäßen Registertransfer-Modells zu veranlassen, wenn das Programm vom Rechner ausgeführt wird.

Das Computerprogrammprodukt kann beispielsweise ein Datenträger sein, auf welchem ein entsprechendes Computerprogramm gespeichert ist, oder es kann ein Signal oder Datenstrom sein, der über eine Datenverbindung in den Prozessor eines Computers geladen werden kann.

### Kurze Beschreibung der Figuren

Im Folgenden wird die Erfindung anhand eines Ausführungsbeispiels näher erläutert. Dabei zeigt
- Fig. 1: eine schematische Darstellung eines Registertransfer-Modells gemäß dem Stand der Technik,
- Fig. 2: eine schematische Darstellung eines Registertransfer-Modells, wie sie gemäß der Erfindung simuliert wird.

### Ausführliche Beschreibung der Figuren

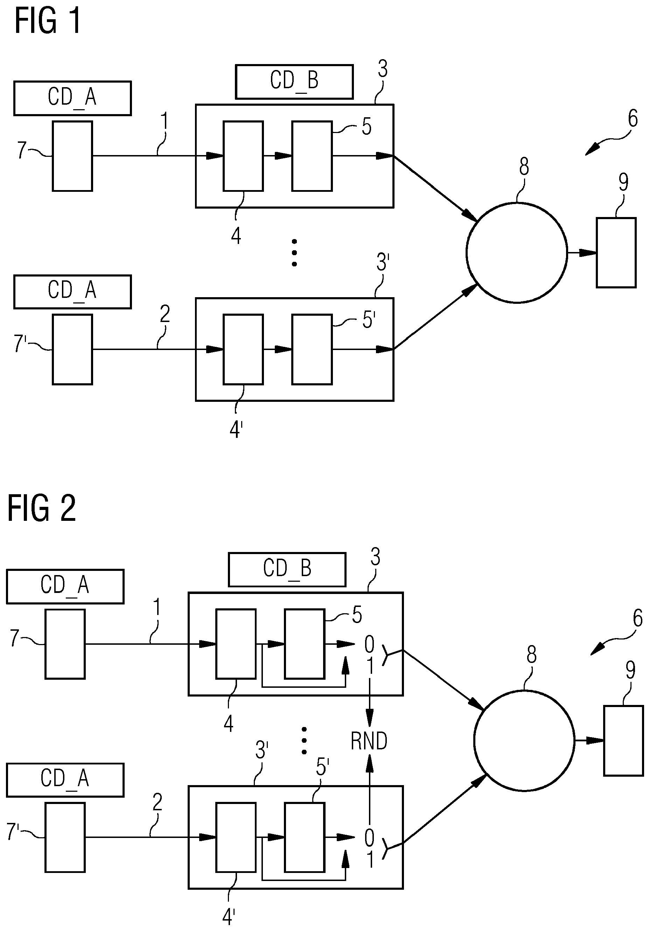

Fig. 1 zeigt ein Registertransfer-Modell gemäß dem Stand der Technik. Dabei wird ein erster CDC-Rekonvergenz-Pfad 1 mittels einer ersten Taktübergangsstufe 3 abgetaktet und ein zweiter CDC-Rekonvergenz-Pfad 2 mittels einer zweiten Taktübergangsstufe 3' abgetaktet, bevor beide CDC-Rekonvergenz-Pfade 1, 2, jeweils aus einer Clock-Domain A (CD A) heraus, in einer Ziel-Clock-Domain, Clock Domain B (CD_B), welche von einer Clock Domain A (CD_A) verschieden ist, auf eine gemeinsame Registerstufe 6 zusammengeführt werden. Jede Clock-Domain A (CD_A) wird durch ein Flipflop 7, 7' dargestellt. Die Signale der CDC-Rekonvergenz-Pfade 1, 2 können Datensignale, Steuersignale oder, im Fall des CDC-Rekonvergenz-Pfads 2, auch Qualifier-Signale sein. Die gemeinsame Registerstufe 6 ist hier als Logik ("logic") 8 mit einem Flipflop 9 dargestellt, wobei das Flipflop 9 ebenfalls in der Ziel-Clock-Domain, Clock Comain B (CD-B), liegt.

In der Registertransferebene gemäß Fig. 1 erfahren die in den beiden CDC-Rekonvergenz-Pfaden geführten Signale jeweils zwei Abtaktungen, nämlich beim Durchlaufen des ersten Flipflops 4, 4' jeweils eine erste Abtaktung und beim Durchlaufen eines weiteren Flipflops 5, 5' jeweils eine zweite Abtaktung.

In der Realität kommt es jedoch vor, dass die parallel synchronisierten CDC-Pfade einer integrierten Schaltung bedingt durch das Chip-Timing nicht dieselbe Verzögerung enthalten, wie dies in RTL-Simulationen auf Basis des Registertransfer-Modells gemäß Fig. 1 stets der Fall ist. So kann es etwa in einer integrierten Schaltung, die mittels des Registertransfer-Modells gemäß Fig. 1 simuliert werden soll, vorkommen, dass das in dem ersten CDC-Rekonvergenz-Pfad 1 geführte Signal in der Realität eine Verzögerung von zwei Takt-Perioden und das in dem zweiten CDC-Rekonvergenz-Pfad 2 geführte Signal lediglich eine Verzögerung von einer Takt-Periode aufweist.

Um solche Unterschiede im Rahmen von RTL-Simulationen erfassen und direkt in das zu simulierende Modell integrieren zu können, ist es bei einem erfindungsgemäßen Registertransfer-Modell gemäß Fig. 2 vorgesehen, dass das weitere Flipflop 5, 5' jeder zur Abtaktung vorgesehenen Taktübergangsstufe 3, 3' derart modelliert wird, dass bei der Simulation die Möglichkeit besteht, das weitere Flipflop 5, 5' kurzzuschließen.

In dem in Fig. 2 dargestellten Ausführungsbeispiel der Erfindung erfolgt das Kurzschließen des weiteren Flipflops 5, 5' jeder der beiden zur Abtaktung vorgesehenen Taktübergangsstufen 3, 3' in Abhängigkeit von jeweils einer Zufallszahl RND. Das weitere Flipflop 5 der ersten zur Abtaktung vorgesehenen Taktübergangsstufe 3 wird in Abhängigkeit einer ersten Zufallszahl und das weitere Flipflop 5' der zweiten zur Abtaktung vorgesehenen Taktübergangsstufe 3' wird in Abhängigkeit einer zweiten Zufallszahl kurzgeschlossen. Beispielsweise erfolgt der Kurzschluss immer dann, wenn eine Zufallszahl zwischen 0 und 1 größer als 5 ist.

### Bezugszeichen

- 1: erster CDC-Rekonvergenz-Pfad
- 2: zweiter CDC-Rekonvergenz-Pfad
- 3, 3': Taktübergangsstufe (CDC-Zelle) zur Abtaktung
- 4, 4': erstes Flipflop
- 5, 5': weiteres Flipflop
- 6: gemeinsame Taktübergangsstufe in Ziel-Clock-Domain
- 7, 7': Flipflop
- 8: Logik
- 9: Flipflop

- CD_A: Clock-Domain A
- CD_B: Clock-Domain B
- RND: Zufallszahl

## Patentansprüche

1. Registertransfer-Modell für die Simulation eines integrierten Schaltkreises, umfassend
- zumindest einen ersten CDC-Rekonvergenz-Pfad (1) sowie
- zumindest einen zweiten CDC-Rekonvergenz-Pfad (2),
- wobei der erste CDC-Rekonvergenz-Pfad (1) und der zweite CDC-Rekonvergenz-Pfad (2) in einer Ziel-Clock-Domain auf eine gemeinsame Registerstufe (6) zusammenkommen und
- wobei in der Ziel-Clock-Domain jeweils eine Taktübergangsstufe (3,3') zur Abtaktung jedes CDC-Rekonvergenz-Pfades (1,2) vorgesehen ist, welche Taktübergangsstufe (3,3') jeweils ein erstes Flipflop (4,4') sowie jeweils zumindest ein weiteres Flipflop (5,5') umfasst,
**dadurch gekennzeichnet, dass** das zumindest eine weitere Flipflop (5,5') kurzschließbar in der Taktübergangsstufe (3,3') angeordnet ist.

2. Registertransfer-Modell nach Anspruch 1, **dadurch gekennzeichnet, dass** das zumindest eine weitere Flipflop (5,5') dazu eingerichtet ist, jeweils in Abhängigkeit von einer, vorzugsweise zwischen 0 und 1 liegenden, Zufallszahl (RND) kurzgeschlossen zu werden.

3. Registertransfer-Modell nach einem der Ansprüche 1 oder 2, **dadurch gekennzeichnet, dass** jede zur Abtaktung vorgesehene Taktübergangsstufe (3,3') jeweils genau ein weiteres Flipflop (5,5') aufweist.

4. Registertransfer-Modell nach einem der Ansprüche 1 oder 2, **dadurch gekennzeichnet, dass** zumindest eine, vorzugsweise jede, der zur Abtaktung vorgesehenen Taktübergangsstufen (3,3') jeweils mehrere weitere Flipflops (5,5') aufweist, wobei eines, mehrere oder jedes dieser weiteren Flipflops (5,5') kurzschließbar in der Taktübergangsstufe (3,3') angeordnet ist/sind.

5. Verfahren zur Simulation eines integrierten Schaltkreises umfassend die folgenden Schritte:
- Abtakten eines in einem ersten CDC-Rekonvergenz-Pfad (1) geführten ersten Signals mittels einer ersten Taktübergangsstufe (3), welche erste Taktübergangsstufe (3) ein erstes Flipflop (4) sowie zumindest ein weiteres Flipflop (5) umfasst;
- Abtakten eines in einem zweiten CDC-Rekonvergenz-Pfad (2) geführten zweiten Signals mittels einer zweiten Taktübergangsstufe (3'), welche zweite Taktübergangsstufe (3') ein erstes Flipflop (4') sowie zumindest ein weiteres Flipflop (5') umfasst;
- Kurzschließen des zumindest einen weiteren Flipflops (5) der ersten Taktübergangsstufe (3) während des Abtaktens des ersten Signals und/oder Kurzschließen des zumindest einen weiteren Flipflops (5') der zweiten Taktübergangsstufe (3') während des Abtaktens des zweiten Signals.

6. Verfahren nach Anspruch 5, **dadurch gekennzeichnet, dass** das Kurzschließen auf Basis von zumindest einer, vorzugsweise zwischen 0 und 1 liegenden, Zufallszahl (RND) erfolgt.

7. Verfahren nach Anspruch 5, **dadurch gekennzeichnet, dass** das Kurzschließen des zumindest einen weiteren Flipflops (5) der ersten Taktübergangsstufe (3) auf Basis einer ersten Zufallszahl (RND) erfolgt und/oder das Kurzschließen des zumindest einen weiteren Flipflops (5') der zweiten Taktübergangsstufe (3') auf Basis einer zweiten Zufallszahl (RND) erfolgt.

8. Verfahren nach Anspruch 7, **dadurch gekennzeichnet, dass** die erste Zufallszahl (RND) durch einen ersten Zufallszahlengenerator erzeugt wird und die zweite Zufallszahl (RND) durch einen zweiten Zufallszahlengenerator erzeugt wird.

9. Computerprogrammprodukt, welches ein Programm umfasst und direkt in einen Speicher eines Rechners ladbar ist, mit Programm-Mitteln, um alle Schritte des Verfahrens nach einem der Ansprüche 5 bis 8 zu veranlassen, wenn das Programm vom Rechner ausgeführt wird.

10. Computerprogrammprodukt, welches ein Programm umfasst und direkt in einen Speicher eines Rechners ladbar ist, mit Programm-Mitteln, um die Implementierung des Registertransfer-Modells nach einem der Ansprüche 1 bis 4 zu veranlassen, wenn das Programm vom Rechner ausgeführt wird.
